# EUROPÄISCHE PATENTSCHRIFT

(11) **EP 0 748 168 B1**
(45) Veröffentlichungstag und Bekanntmachung des Hinweises auf die Patenterteilung: **28.10.1998**
(21) Anmeldenummer: 95912162.5
(22) Anmeldetag: 24.02.1995
(51) Int. Cl.: A23L 2/38, A23F 3/10, A23L 2/84, C12G 3/02

(54) **ALKOHOLFREIES ERFRISCHUNGSGETRÄNK**
ALCOHOL-FREE REFRESHING DRINK
BOISSON RAFRAICHISSANTE SANS ALCOOL

(30) Priorität: 24.02.1994 DE 4406087
(43) Veröffentlichungstag der Anmeldung: 18.12.1996
(73) Patentinhaber: Leipold, Dieter, 97645 Ostheim/Rhön (DE)
(72) Erfinder: Peter, Sigrid, D-97645 Ostheim/Rhön (DE)
(74) Vertreter: Köster, Hajo, Dr.
(86) Internationale Anmeldenummer: EP9500685
(87) Internationale Veröffentlichungsnummer: WO9522911

(56) Entgegenhaltungen:
- EP-A- 0 223 705
- WO-A-91/12734
- DE-A- 4 012 000
- DATABASE WPI Week 9318 Derwent Publications Ltd., London, GB; AN 93-148491 & JP,A,05 084 065 (ASAHI BREWERIES) , 6.April 1993
- PATENT ABSTRACTS OF JAPAN vol. 011 no. 096 (C-412) ,26.März 1987 & JP,A,61 247371 (YONEMI TANAKA) 4.November 1986,
- PATENT ABSTRACTS OF JAPAN vol. 007 no. 242 (C-192) ,27.Oktober 1983 & JP,A,58 129946 (KIYO KONDOU) 3.August 1983,

## Beschreibung

Die Erfindung betrifft ein alkoholfreies Erfrischungsgetränk und ein Verfahren zu dessen Herstellung.

Es ist bereits eine große Zahl von alkoholfreien Erfrischungsgetränken bekannt. Es handelt sich dabei im wesentlichen um Fruchtsäfte, Fruchtnektare, modifizierte Fruchtsäfte, Brausen und Limonaden. Bei der Herstellung derartiger Erfrischungsgetränke wird normalerweise Wasser mit Fruchtsäften oder Fruchtauszügen oder deren Ersatzstoffen sowie mit Zucker oder Süßstoffen und mit Säuren, Konservierungsstoffen und Farb- und Aromastoffen versetzt. Zudem kann ein derartiges Gemisch mehr oder weniger stark carbonisiert werden.

Die Verbraucher werden jedoch gegenüber "künstlich hergestellten" Nahrungsmitteln einschließlich Getränken immer kritischer. Es besteht somit ein Bedürfnis nach einem alkoholfreien Erfrischungsgetränk, das aus reinen Naturprodukten und auf biologischem Wege hergestellt wird.

Ein alkoholfreies Erfrischungsgetränk, welches diesen Anforderungen entspricht, ist bereits in der deutschen Patentanmeldung P 40 12 000.7 beschrieben.

Aufgabe der vorliegenden Erfindung ist es, ein verbessertes alkoholfreies Erfrischungsgetränk der genannten Art bereitzustellen, das aus reinen Naturprodukten sowie auf biologischem Wege hergestellt wird und keine "künstlichen Inhaltsstoffe" aufweist.

Gelöst wird diese Aufgabe durch ein alkoholfreies Erfrischungsgetränk gemäß der Lehre des Anspruchs 1. Es handelt sich dabei um ein Getränk, das frei von Alkohol ist.

Zur Herstellung des erfindungsgemäßen alkoholfreien Erfrischungsgetränkes kann man von einem wässrigen Extrakt von toxikologisch und lebensmittelchemisch unbedenklichen Pflanzenteilen von einer Pflanze oder von mehreren Pflanzen ausgehen. Die Pflanzenteile können von Tee und Kräutern stammen. So kann man beispielsweise Teestrauchteile, insbesondere Teeblätter, Matebaumteile, insbesondere Mateblattteile, und alle Kräuter verwenden, die als ernährungsphysiologisch wertvoll oder unbedenklich anerkannt sind, zum Beispiel Pfefferminze, Malve, Hagebutte, Kamille usw.. Als Tee kann man sowohl fermentierten (schwarzen) Tee als auch unfermentierten (grünen) Tee einsetzen.

Eine Vorraussetzung zur Herstellung des erfindungsgemäßen Erfrischungsgetränks ist jedoch, daß die zu fermentierende (wird nachstehend darauf eingegangen) Lösung, eine Stickstoffquelle für die Ernährung von Mikroorganismen enthält. Daher muß zumindest eine der Pflanzen bzw. der Pflanzenteile beim Extrahieren mit Wasser eine Stickstoffquelle in den wässrigen Extrakt abgeben, denn diese Stickstoffquelle wird zur Ernährung der später zu erläuternden Mikroorganismen bzw. Bakterien benötigt, mit deren Hilfe fermentiert wird. Eine derartige, eine Stickstoffquelle liefernde Pflanze bzw. ein derartiges Pflanzenteil ist beispielsweise der Tee. Es ist dem Fachmann bekannt, welche Pflanzen bzw. Pflanzenteile beim Extrahieren eine derartige Stickstoffquelle in den Extrakt bzw. die dabei erhaltene wässrige Lösung abgeben.

Zur Herstellung des erfindungsgemäßen Erfrischungsgetränks kann man auch von üblichen Fruchtsäften einschließlich Dattelsaft etc. ausgehen. Sofern derartige Säfte keine Stickstoffquelle enthalten, muß diese natürlich hinzugegeben werden.

Als wässrige, eine Stickstoffquelle enthaltende Lösung setzt man jedoch vorzugsweise bei der Herstellung des erfindungsgemäßen Erfrischungsgetränks eine in einer Brauerei herstellbare, übliche Würze ein. Als Würze kann man somit jede zur Herstellung von Bier übliche Würze einsetzen. Als Malz für die Herstellung der Würze kann man reines Gerstenmalz und auch jedes andere beliebige Malz einsetzen, beispielsweise Pilsener Malz, dunkles Malz, Caramel Malz etc.. Ein Teil des Malzes kann aber auch Weizenmehl oder Rohfrucht sein, beispielsweise Reis, Mais, Roggen etc..

So kann man beispielsweise eine normale Pilsner-Vorderwürze mit einem Stammwürzegehalt von etwa 14 % zur Anwendung bringen. Als Vorderwürze bezeichnet man den Teil der Würze, der nach dem Maischen vom Läuterbottich in die Sudpfanne abläuft. Diese Vorderwürze wird vorzugsweise auf ca. 1 % verdünnt. Eine derartige Verdünnung ist jedoch nicht unbedingt erforderlich. Je höher der Stammwürzegehalt ist, desto "stärker" ist natürlich auch das letztendlich erhaltene Erfrischungsgetränk.

Sofern die eingesetzte wässrige, eine Stickstoffquelle enthaltende Lösung noch keine Glucose oder noch keinen Zucker, aus dem Glucose freigesetzt werden kann, enthält oder sofern die Lösung Glucose bzw. diesen Zucker noch nicht in ausreichendem Maße enthält, gibt man Glucose als solches oder einen Zucker, aus dem Glucose freigesetzt werden kann, hinzu. Mit dem Ausdruck "Zucker, aus dem Glucose freigesetzt werden kann", sollen solche Zucker bezeichnet werden, die in der Lage sind, in wässriger Lösung Glucose freizusetzen, beispielsweise beim Ansäuern oder durch enzymatische Spaltung etc.. Dazu zählen beispielsweise Invertzucker, Honig etc.. Der Zucker muß somit Glucose bereitstellen können, so daß diese von dem nachstehend näher beschriebenen Mikroorganismus bzw. Mikroorganismussystem verarbeitet werden kann. Erforderlichenfalls setzt man die Glucose aus dem Zucker vor der Durchführung der nachstehend beschriebenen Fermentation auf geeignete Weise frei, beispielsweise durch Ansäuern oder durch enzymatische Behandlung.

Setzt man beispielsweise als wässrige Lösung die oben beschriebene Würze ein, kann man im übrigen auch die in der Würze bereits vorhandene Maltose enzymatisch in Glucose spalten. In diesem Fall ist es somit überhaupt nicht erforderlich. Glucose oder einen Zucker zuzusetzen.

Vorzugsweise setzt man jedoch reine Glucose zu.

Der zur Anwendung gebrachte Mikroorganismus soll die zugesetzte oder im System bereitgestellte Glucose in Gluconsäure umwandeln. Dazu können alle Microorganismen bzw. Microorganismussysteme eingesetzt werden, die dazu in der Lage sind. Diesbezüglich seien beispielsweise genannt: Gluconobacter oxydans, Gluconobacter suboxydans, Aspergillus niger, verschiedene Acetobacter, beispielsweise Acetobacter suboxydans. Auch ist es möglich, die Gluconsäure aus der Glucose enzymatisch herzustellen, beispielsweise durch Anwendung von Glucoseoxydase und Katalase. Unter dem Begriff "Mikroorganismus" werden somit alle Bakterien sowie sonstigen "Systeme" verstanden, die in der Lage sind, aus Glucose durch Fermentation Gluconsäure herzustellen. Dieser Mikroorganismus kann alleine bzw. als Reinkultur und auch in Mischung zur Anwendung gebracht werden. Bei der Fermentation muß im übrigen die Glucon säure nicht das einzige erhaltene Produkt sein. Es können Mikroorganismen eingesetzt werden, die neben Gluconsäure auch andere Säuren produzieren, beispielsweise Glucoronsäure. Natürlich sollte kein Mikroorganismus zur Anwendung gebracht werden, der einen der in der wässrigen Lösung vorhandenen Stoffe zu Alkohol fermentiert. Vorzugsweise setzt man jedoch Gluconobacter oxydans ein.

Vorzugsweise versetzt man die zu fermentierende wässrige Lösung mit 5 % eines bereits fermentierten Ansatzes bzw. einer fertig fermentierten Lösung.

Vorzugsweise führt man die Fermentation der zugegebenen Glucose (das erfindungsgemäße Verfahren wird nachstehend anhand der reinen Glucose beschrieben, die stellvertretend für alle Glucose freisetzenden Zucker steht) bis zu einem pH kleiner gleich 2,8 und insbesondere bis zu einem pH-Wert von 2,3 durch. Natürlich muß man eine ausreichende Glucosemenge für die Fermentation zur Verfügung stellen, damit der gewünschte pH-Wert erreicht werden kann.

Der erreichte pH-Wert ist natürlich nicht nur von der Glucosemenge sondern auch davon abhängig, wie weit man die Fermentation durchführt. So kann man beispielsweise die Fermentation bis zum Ende und somit bis zum Verbrauch der Glucose durchführen. Es ist auch möglich, derart zu fermentieren, daß noch eine Restglucosemenge in der wässrigen Lösung verbleibt und somit nicht fermentiert wird.

Zur Durchführung der Fermentation ist es erforderlich, daß dem Mikroorganismus Sauerstoff zur Verfügung gestellt wird. Dies kann auf jede beliebige Art und Weise geschehen. Zweckmäßigerweise belüftet man dazu die zu fermentierende wässrige Lösung. Man belüftet dazu zweckmäßigerweise stark, insbesondere mit ca. 0,5 l Luft/Liter/Minute während eines Zeitraums von 48 bis 96 Stunden, insbesondere während eines Zeitraums von ca. 72 Stunden. Dabei wird vorzugsweise gerührt.

Ein weiteres wichtiges erfindungsgemäßes Merkmal besteht darin, daß man dafür Sorge trägt, daß in dem erfindungsgemäßen Erfrischungsgetränk mindestens 15 mmol/l Salze der Gluconsäure (d.h. Gluconate) vorhanden sind. Es handelt sich dabei um Mineralstoffsalze und insbesondere um solche von den Alkali- und Erdalkalimetallen. Diese Gluconate kann man in der Lösung selbst erzeugen, indem man einen Teil der durch die Fermentation erhaltenen Gluconsäure in das entsprechende Gluconat überführt. Dazu gibt man mindestens ein alkalisch machendes Mineralstoffsalz zu der fermentierten Lösung. Es kann sich dabei um Carbonate, Hydrogencarbonate und/oder Hydroxyde und auch Oxyde von Alkalimetallen und Erdalkalimetallen handeln. Vorzugsweise setzt man mindestens zwei der genannten Alkali-und Erdalkalimetalle ein. Insbesondere bevorzugt setzt man dabei ein Natrium-, Kalium-, Magnesium- oder Calciumsalz oder eine beliebige Mischung von mindestens zweien der genannten Salze ein.

So kann man beispielsweise 15 mmol/l Kaliumgluconat in der Lösung erzeugen, indem man 15 mmol/l Kaliumhydroxyd zu der fermentierten Lösung hinzugibt. Sofern man ein Erdalkalihydroxyd hinzugibt, muß man natürlich berücksichtigen, daß die Erdalkalimetalle zweiwertig sind. Somit muß man beispielsweise mindestens 7,5 mmol/l Calciumhydroxyd (Ca(oH)zt₂) hinzugeben. Man kann die Gluconsäure auch durch Einsatz von Hydrogencarbonaten und Carbonaten in das entsprechende Gluconat überführen. Dann muß man die entsprechende Äquivalentmenge zur Anwendung bringen.

Wenn hier von Mineralstoffsalzen die Rede ist, dann handelt es sich vorwiegend um die ernährungsphysiologisch wertvollen und unbedenklichen Erdalkali- und Alkalisalze. Gleichwohl ist es auch möglich, geringe Mengen an alkalisch machenden Salzen von Spurenelementen und anderen Metallen zur Anwendung zu bringen, sofern derartige Metallionen in einem Lebensmittel, wie einem Getränk, vorhanden sein dürfen.

Die Frage, wie groß die Gluconatmenge in dem Erfrischungsgetränk sein soll und wie groß daher die Menge zuzugebenden Mineralstoffsalz sein soll, hängt davon ab, für welchen Bedarf das erfindungsgemäße Erfrischungsgetränk dienen soll. Wünscht man beispielsweise ein Getränk für Sportler mit einem hohen Mineraliengehalt herzustellen, dann wählt man diese Menge entsprechend hoch. Vorzugsweise enthält das erfindungsgemäße Erfrischungsgetränk daher 20 bis 80 mmol/l Gluconat. Die Mengenangabe mmol bezieht sich dabei auf das Anion der Gluconsäure. Die Wertigkeit des Kations wird nicht berücksichtigt. Somit muß mindestens 15 mmol/l Alkaligluconat vorhanden sein, was wiederum 7,5 mmol/l Erdalkaligluconat entspricht.

Wenn hier von Abschluß der Fermentation bzw. von beendeter Fermentation die Rede ist, dann heißt dies nicht, daß die Glucose vollständig in Gluconsäure umgewandelt worden ist. Vielmehr soll dadurch zum Ausdruck gebracht werden, daß der Fermentationsprozeß beendet ist, beispielsweise indem man ihn durch Abfiltrieren des Mikroorganismus oder durch jede andere bekannte Maßnahme stoppt. Erfindungsgemäß sind somit sowohl die Variante, nach der die gesamte Glucose in Gluconsäure umgewandelt wurde, als auch die Variante, nach der nur ein Teil umgewandelt wurde und noch Glucose vorliegt, umfaßt.

Wenn hier von einem Mineralstoffsalz die Rede ist, dann ist der Begriff "Salz" nicht im strengen Sinne zu verstehen. Vielmehr zählen zu einem derartigen Mineralstoffsalz alle Mineralstoffverbindungen, die in der Lage sind, Gluconsäure in das entsprechende Salz und somit in das Gluconat zu überführen. Auf die Art des Anions des Mineralstoffsalzes kommt es somit nicht an. Natürlich setzt man ein lebensmittelchemisch unbedenkliches und für Getränkezwecke geeignetes Mineralstoffsalz ein. Dieses muß übrigens nicht in fester Form zugegeben werden sondern kann natürlich auch in Form einer wässrigen Lösung zur Anwendung gebracht werden.

Es hat sich überraschenderweise herausgestellt, daß es aufgrund der Anwesenheit von Gluconaten, insbesondere von Calcium, Natrium, Kalium und Magnesiumgluconat, nicht erforderlich ist, ein bakteriostatisches Mittel oder ein Konservierungsmittel einzusetzen. Es wurde insbesondere überraschend gefunden, daß die Gluconate und insbesondere die genannten Alkali- und Erdalkaligluconate die Hefegärung verhindern. Dies gilt insbesondere dann, wenn mindestens 15 mmol/l Gluconat vorhanden sind. Dabei ist insbesondere das Kaliumgluconat wirksam. Zudem ist die bakteriostatische und konservierende Wirkung insbesondere dann ausgeprägt, wenn mindestens zwei Metallkationen vorhanden sind.

Durch die Zugabe des Mineralstoffsalzes überführt man somit einen Teil der fermentativ erhaltenen Gluconsäure in die entsprechenden Gluconate. Das erfindungsgemäße Erfrischungsgetränk beinhaltet auf diese Weise nicht nur die angenehm schmeckende Gluconsäure, welche dem Getränk einen erfrischenden Säuregeschmack verleiht, sondern auch Mineralien, so daß das erfindungsgemäße alkoholfreie Erfrischungsgetränk ein ernährungsphysiologisch wertvolles Mineral-Aufbaugetränk darstellt. Zudem ist kein Konservierungsmittel erforderlich.

Vorzugsweise fermentiert man die Glucose bis zu einem pH-Wert von kleiner gleich ca. 2,8 und insbesondere bis zu einem pH-Wert von ca. 2,3. Es versteht sich von selbst, daß man eine ausreichende Menge Glucose zusetzen oder in der zu fermentierenden Lösung freisetzen muß, damit bis zu einem derartigen pH-Wert und somit bis zu einem derartigen Gluconsäuregehalt fermentiert werden kann. Auch wenn man vorzugsweise bis zu den angegebenen Werten fermentiert, unterliegt das erfindungsgemäße Erfrischungsgetränk hinsichtlich des Gluconsäuregehaltes keinen besonderen Beschränkungen. Die Frage, wieviel freie Gluconsäure im fertigen Erfrischungsgetränk vorhanden sein soll, hängt primär davon ab, welchen Geschmack man herzustellen wünscht. Natürlich schmeckt ein stark gluconsäurehaltiges Getränk saurer als ein wenig oder kein freie Gluconsäure enthaltendes. Vorzugsweise enthält das fertige alkoholfreie Erfrischungsgetränk jedoch mindestens 5 g/l, insbesondere 10 bis 40 g/l Gluconsäure.

Der Vollständigkeit halber sei noch erwähnt, daß man bei der Herstellung des erfindungsgemäßen Erfrischungsgetränks den eingesetzten Mikroorganismus auf per se bekannte Weise abfiltriert, beispielsweise nach Durchführung der Stufe b) oder nach Durchführung der Stufe c).

Die Stufen b) und c) führt man vorzugsweise bei ca. Raumtemperatur durch.

Das erfindungsgemäße Getränk hat im übrigen nach der Fermentation und auch noch nach Zugabe des Mineralstoffsalzes eine hellgelbe Farbe.

Es wurde nun ferner überraschend gefunden, daß man die Farbe und/oder den Geschmack des erfindungsgemäßen Erfrischungsgetränks verändern kann. Dazu fermentiert man die gesamte vorhandene Glucosemenge damit später keine Sauerstoffzehrung durch Mikroorganismen mehr stattfinden kann. Zudem ist es erforderlich ist, einen pH-Wert von kleiner gleich 2,8 und insbesondere von ca. 2,3 zu erhalten. Außerdem gibt man das Mineralstoffsalz in einer solchen Menge zu, daß der pH danach größer als ca. 2,8 ist.

Im Anschluß an die Mineralstoffsalzzugabe belüftet man in Stufe d) erneut und rührt vorzugsweise dabei. Dadurch wird die gegebenenfalls vorhandene Kohlensäure ausgetrieben. Zudem erfolgt eine Sauerstoffaufnahme. Man belüftet dabei in dieser Stufe d) vorzugsweise 12 bis 60 Stunden, insbesondere 24 bis 48 Stunden. Danach hat sich die anfängliche Farbe der Flüssigkeit nur geringfügig verändert.

Nach Ende der Belüftung lagert man die Flüssigkeit bzw. das Getränk vorzugsweise 6 bis 10 Tage, insbesondere ca. 8 Tage. Die Lagertemperatur beträgt vorzugsweise 30 bis 35°C. Bei dieser Lagerung sollte der Flüssigkeit möglichst kein oder nur wenig neuer Sauerstoff zugeführt werden. Man kann somit unter Luftabschluß arbeiten oder auch offen stehen lassen, wobei jedoch ein erneutes aktives Belüften vermieden werden sollte.

Bei der Lagerung findet eine diesseits als "Reifeprozeß" bezeichnete Veränderung statt. Die gelagerte Flüssigkeit verändert nämlich sowohl ihre Farbe als auch ihren Geschmack. Die Stärke der Geschmacks- und Farbveränderung hängt dabei unter anderem von der Lagerzeit ab. So wird die Flüssigkeit, die ursprünglich eine hellgelbe Farbe hatte, zunächst hellrot und schließlich dunkelrot wie Burgunder. Der Geschmack, der anfangs säuerlich-zitronenartig ist, wird fruchtig und erinnert schließlich an die schwarze Johannisbeere. Natürlich hängt die Intensität des Geschmacks und der Farbe auch von der Konzentration der anfangs eingesetzten Würze ab.

Durch Variation der genannten Parameter kann man somit unterschiedlich gefärbte und unterschiedlich schmeckende, absolut alkoholfreie Erfrischungsgetränke herstellen.

Zweckmäßigerweise treibt man den Sauerstoff am Ende der Lagerung aus dem Getränk aus, beispielsweise indem man CO₂ einbläst.

Das so nach der Stufe c) oder e) erhaltene Getränk kann man dann je nach Erfordernis mit einem Süßungsmittel, beispielsweise Saccharose, versetzen. Zudem filtriert man zweckmäßigerweise. Man kann auch mit Wasser verdünnen. Zudem carbonisiert man vorzugsweise und füllt dann ab.

Durch den Ausdruck "dadurch erhältlich" in den Ansprüchen soll zum Ausdruck gebracht werden, daß das beanspruchte Erfrischungsgetränk auf die in den Ansprüchen beschriebene Weise herstellbar ist. Die Verfahrensmerkmale dienen somit zur Charakterisierung der Sache (Erfrischungsgetränk) als solches. Es ist nicht ausgeschlossen, daß das gleiche Erfrischungsgetränk auch auf andere Weise hergestellt werden kann. So wäre es beispielsweise denkbar, die Alkali- und Erdalkaligluconate als solche hinzuzugeben. Zudem beziehen sich die in den Ansprüchen aufgeführten Mengenangaben auf das fertige Erfrischungsgetränk. Natürlich ist es möglich, bei niedrigeren und auch bei höheren Konzentrationen zu arbeiten und dann entweder Wasser zu entziehen oder mit Wasser zu verdünnen. So kann man das Wasser beispielsweise mit Hilfe der Umkehr-Osmose entziehen und somit ein Konzentrat herstellen.

Das fertige und somit verzehrbare Erfrischungsgetränk enthält vorzugsweise mindestens 3 g/l, insbesondere 10 bis 20 g/l Gluconsäure und zusätzlich mindestens 15 mmol/l, insbesondere 20 bis 80 mmol/l Gluconat.

Erfindungsgemäß ist es somit möglich, ein alkoholfreies Erfrischungsgetränk aus Malz, Zucker und Wasser in etwa wie ein Bier "zu brauen". Man erhält ein ernährungs-physiologisch wertvolles Mineral-Aufbaugetränk. Dieses Getränk läßt sich zudem mit vergleichsweise geringem Investitionsaufwand in jeder Brauerei herstellen.

Gegenstand der Erfindung ist auch ein Verfahren zur Herstellung eines alkoholfreien Erfrischungsgetränkes gemäß der Lehre des Anspruchs 11.

Die Herstellung des erfindungsgemäßen Erfrischungsgetränkes wird nachstehend anhand von Beispielen näher erläutert.

### Beispiel 1

Eine normale Pilsner-Vorderwürze mit einem Stammwürzegehalt von etwa 14 % wird mit Wasser auf einen Stammwürzegehalt von 1 % verdünnt.

Dazu gibt man 35 g Glucose/l; der pH-Wert beträgt ca. 5,6. Dieses Würze-Glucose-Gemisch wird mit 5 % bakterienhaltiger fermentierter Würze aus einem vorherigen Ansatz versetzt. Bei den Bakterien handelt es sich um Gluconbacter oxydans.

Das erhaltene Gemisch wird dann in einem Magnetrührer bei 920 U/Min. bei Zimmertemperatur etwa 72 Stunden gerührt und belüftet. Dies geschieht in einem Fermenter. Nach etwa 72 Stunden (je nach Temperatur und Sauerstoffeinschlag) beträgt der Gluconsäuregehalt ca. 35 g/l. Die Fermentation ist beendet; es ist keine Glucose mehr vorhanden. Der pH-Wert liegt bei ca. 2,3. Anschließend wird filtriert.

Danach werden 1 g CaCO₃, 1 g K₂CO₃ und 2,5 g MgCO₃/l zu der filtrierten Lösung hinzugegeben. Durch die Zugabe dieser Carbonate wird ein Teil der Gluconsäure in die entsprechenden Gluconate umgewandelt. Der pH-Wert wird dabei auf ca. 3,3 bis 3,5 angehoben. Zudem wird CO₂ frei. Der Gluconsäuregehalt sinkt auf ca. 13 g/l.

Im Anschluß daran wird bei Zimmertemperatur weiter belüftet und gerührt. Nach 24 bis 48 Stunden hat die Flüssigkeit die anfängliche Farbe nur geringfügig verändert. Die Belüftung und das Rühren werden eingestellt.

Im Anschluß daran wird die Flüssigkeit unter Luftabschluß bei 35°C gelagert. Nach 8-tägiger Lagerung hat die Flüssigkeit eine tiefrote Farbe und einen fruchtartigen Geschmack angenommen.

Die Flüssigkeit wird nun mit 100 g Saccharose versetzt, filtriert, mit Wasser im Verhältnis 1:1 gemischt, carbonisiert und abgefüllt.

Man erhält ein Getränk mit folgender Zusammensetzung:
- pH-Wert: 3,2 bis 3,4
- Zuckergehalt: 50 g/l (isotonisch)
- Kaloriengehalt: ca. 200 kcal./l
- Gluconsäure: ca. 6 g/l
- Alkohol: nicht nachweisbar
- Kalium: ca. 250 mg/l
- Kalzium: ca. 200 mg/l
- Magnesium: ca. 350 mg/l
- Farbe: hellrot

### Beispiel 2

Eine Würze wird mit Wasser auf 0,7 % verdünnt und mit 20 g Traubenzucker pro Liter vermischt. Anschließend fermentiert man nach Zugabe von Gluconobacter oxydans wie im Beispiel 1 beschrieben bis zu einem Säurewert von 20 g/l Gluconsäure fermentiert (pH = 2,50).

Danach gibt man 2 g/l Calciumcarbonat und 1 g/l Magnesiumcarbonat hinzu, wodurch sich der Säuregehalt auf ca. 10 g/l Gluconsäure verringert; der pH-Wert steigt dabei auf ca. 3,40. Der Mineralgehalt liegt dann bei ca. 800 mg/l Calcium und 300 mg/l Magnesium.

Das so erhaltene Getränk kann man nun je nach Erfordernis filtrieren, mit Wasser verdünnen, carbonisieren etc.. Im Anschluß daran füllt man ab.

Als Malz für die Herstellung der Würze kann man reines Gerstenmalz verwenden (beispielsweise Pilsener Malz, dunkles Malz, Caramel Malz). Einen Teil des Malzes kann man auch durch Weizenmalz oder Rohfrucht, z.B. Reis, Mais, Roggen etc., ersetzen.

Die Anzucht von Gluconobacter oxydans ist im übrigen dem Fachmann bekannt und unter anderem auch in der deutschen Patentanmeldung P 40 17 000.7 beschrieben. Auf die entsprechende Offenbarung wird hiermit ausdrücklich Bezug genommen.

### Beispiel 3

Man ersetzt die Würze des Beispiels 2 durch schwarzen Tee (hergestellt durch Extraktion von 2 g Teeblättern pro l Wasser; Teeblätter werden abfiltriert). Ansonsten verfährt man wie im Beispiel 2.

## Patentansprüche

1. Alkoholfreies Erfrischungsgetränk,
dadurch erhältlich, daß man
a) von einer wässrigen, eine Stickstoffquelle für die Ernährung von Mikroorganismen enthaltenden Lösung ausgeht und diese Lösung mit Glucose und/oder einem Zucker, aus dem Glucose freigesezt werden kann, versetzt, sofern diese Lösung Glucose oder einen derartigen Zucker nicht oder nicht in ausreichendem Maße enthält,
b) die in a) erhaltene Lösung mit einem Mikroorganismus, der Glucose in Gluconsäure umwandeln kann, versetzt und die Glucose zumindest teilweise fermentiert, und
c) nach beendeter Fermentation mindestens 15 mmol/l der Gluconsäure durch Zugabe eines alkalisch machenden Mineralstoffsalzes in das entsprechende Gluconat überführt.

2. Alkoholfreies Erfrischungsgetränk nach Anspruch 1,
dadurch erhältlich, daß man in Stufe c) als Mineralstoffsalz ein Alkalicarbonat, -hydrogencarbonat oder -hydroxid oder ein Erdalkalicarbonat, -hydrogencarbonat oder -hydroxid oder eine Mischung davon auf Basis von insbesondere mindestens zwei Metallkationen zugibt.

3. Alkoholfreies Erfrischungsgetränk nach Anspruch 2,
dadurch erhältlich, daß man in Stufe c) ein Mineralstoffsalz von Na, K, Ca und/oder Mg zugibt.

4. Alkoholfreies Erfrischungsgetränk nach einem der vorhergehenden Ansprüche
dadurch erhältlich, daß man als wässrige Lösung eine unverdünnte oder verdünnte Bierwürze oder einen Extrakt von toxikologisch und lebensmittelchemisch unbedenklichen Pflanzenteilen von einer oder mehreren Pflanzen einsetzt.

5. Alkoholfreies Erfrischungsgetränk nach Anspruch 4,
dadurch erhältlich, daß man in Stufe a) eine Würze mit einem Stammwürzegehalt von 1 % einsetzt, die man mit 5 % mikroorganismushaltiger fermentierter Würze aus einem vorherigen Ansatz versetzt.

6. Alkoholfreies Erfrischungsgetränk nach einem der vorhergehenden Ansprüche
dadurch erhältlich, daß man in Stufe b) Gluconbacter oxydans als Mikroorganismus einsetzt.

7. Alkoholfreies Erfrischungsgetränkdadurch nach einem der vorhergehenden Ansprüche
dadurch erhältlich, daß man in Stufe b) bis zu einem pH-Wert von mindestens ≤ 2,8 und insbesondere von 2,3 fermentiert und daß man das Mineralstoffsalz in einer solchen Mange zugibt, daß nach der Zugabe der pH-Wert größer als 2,8 ist.

8. Alkoholfreies Erfrischungsgetränk nach Anspruch 7,
dadurch erhältlich, daß man in Stufe b) die vorhandene Glucose vollständig fermentiert und nach Zugabe des Mineralstoffsalzes
d) erneut 12 bis 60 h, insbesondere 24 bis 48 h, belüftet,
e) anschließend 6 bis 10 Tage, insbesondere 8 Tage, stehen läßt und gegebenenfalls CO₂ zur Sauerstoffentfernung einbläst.

9. Alkoholfreies Erfrischungsgetränk nach einem der vorhergehenden Ansprüche,
dadurch erhältlich, daß man entweder nach Durchführung der Stufe c) oder der Stufe e) mit einem Süßungsmittel versetzt, filiert, mit Wasser verdünnt, carbonisert und/oder abfüllt.

10. Alkoholfreies Erfrischungsgetränk nach einem der vorhergehenden Ansprüche,
**gekennzeichnet** durch
mindestens 5 g/l, insbesondere 10 bis 20 g/l, Gluconsäure, und mindestens 15 mmol/l, insbesondere 20 bis 80 mmol/l, Gluconat, insbesondere als Na-, K-, Mg- und/oder Ca-Gluconat.

11. Verfahren zur Herstellung eines alkoholfreien Erfrischungsgetränk,
dadurch **gekennzeichnet,**
daß man die in einem der Ansprüche 1 bis 9 beschriebenen Verfahrensschritte durchführt.

## Claims

1. Alcohol-free refreshing drink thereby obtainable, that
a) an aequous solution containing a source of nitrogen for nourishing microorganisms is prepared and that glucose and/or a sugar from which glucose can be released is added to said solution if said solution does not contain glucose or any such sugar or does not contain a sufficient quantity thereof,
b) the solution obtained in a) is admixed with a microorganism capable of converting glucose to gluconic acid and that the glucose is at least partially fermented and
c) when fermentation is complete, at least 15 mmol/l of the gluconic acid is converted to the corresponding gluconate by addition of an alkalizing mineral salt.

2. Alcohol-free refreshing drink according to claim 1 thereby obtainable, that an alkali carbonate, alkali hydrogen carbonate alkali hydroxide, alkaline earth carbonate, alkaline earth hydrogen carbonate or alkaline earth hydroxide or a mixture thereof on the basis of in particular at least two metal kations is added as mineral salt in step c).

3. Alcohol-free refreshing drink according to claim 2 thereby obtainable that one adds a mineral salt of Na, K, Ca and/or Mg in step c).

4. Alcohol-free refreshing drink according to one of the proceeding claims, obtainable thereby, that an undiluted or diluted beer wort or an extract of toxicologically and food chemically safe parts of one or several plants is used as an aequous solution.

5. Alcohol-free refreshing drink according to claim 4, thereby obtainable, that a wort with an original gravity of 1 % is used which is mixed with a 5 % fermented wort containing microorganisms from an earlier charge or batch, respectively.

6. Alcohol-free refreshing drink according to anyone of the preceeding claims thereby obtainable, that Gluconobacter oxydans is used as microorganism in step b).

7. Alcohol-free refreshing drink according to one of the preceeding claims thereby obtainable, that it is fermented in step b) up to a pH-value of at least ≤ 2.8 and in particular of 2.3 and that the mineral salt is added in such an amount that the pH-value after the addition is greater than 2.8.

8. Alcohol-free refreshing drink according to claim 7 thereby obtainable, that the glucose present is completely fermented in step b) and that after the addition of the mineral salt
d) it is aerated again 12 to 60 hours, in particular 24 to 48 hours and
e) the solution is allowed to stand thereafter 6 to 10 days, in particular 8 days, and that eventually CO₂ is injected for removing oxygen.

9. Alcohol-free refreshing drink according to one of the preceeding claims thereby obtainable, that either after step c) or after step e) a sweetening agent is added and it is filtered, diluted with water, carbonized and/or bottled.

10. Alcohol-free refreshing drink according to one of the preceeding claims,
characterized by at least 5 g/l, in particular 10 to 20 g/l, gluconic acid and at least 15 mmol/l in particular 20 to 80 mmol/l gluconate in particular in the form of Na-, K-, Mg- and/or Ca-gluconate.

11. Process for preparing an alcohol-free refreshing drink
characterized in that the process steps described in one of claims 1 to 9 are performed.

## Revendications

1. Boisson rafraîchissante sans alcool, qui peut s'obtenir :
a) en partant d'une solution aqueuse contenant une source d'azote servant à nourrir les micro-organismes et en mélangeant à cette solution du glucose et/ou un sucre à partir duquel le glucose peut être libéré, dans la mesure où cette solution ne contient pas de glucose ou un tel sucre ou n'en contient pas en quantité suffisante,
b) à mélanger la solution obtenue en a) à un microorganisme qui peut transformer le glucose en acide gluconique et à faire fermenter au moins partiellement le glucose et
c) une fois la fermentation terminée, à transformer au moins 15 mmol/l de l'acide gluconique en gluconate correspondant par addition d'un sel de corps minéraux à formation alcaline.

2. Boisson rafraîchissante sans alcool suivant la revendication 1, qui peut s'obtenir en ajoutant à l'étape c), en tant que sel de corps minéral et sur la base de notamment au moins deux cations métalliques, un carbonate, hydrogénocarbonate ou hydroxyde alcalin ou un carbonate, hydrogénocarbonate ou hydroxyde alcalinoterreux ou un mélange de ceux-ci.

3. Boisson rafraîchissante sans alcool suivant la revendication 2, qui peut s'obtenir en ajoutant à l'étape c) un sel de corps minéral de Na, K, Ca et/ou Mg.

4. Boisson rafraîchissante sans alcool suivant l'une des revendications précédentes, qui peut s'obtenir en introduisant, en tant que solution aqueuse, un moût de bière dilué ou non ou un extrait de constituants végétaux d'une ou plusieurs plantes qui sont inoffensifs sur le plan toxicologique et en ce qui concerne la chimie des produits alimentaires.

5. Boisson rafraîchissante sans alcool suivant la revendication 4, qui peut s'obtenir en introduisant à l'étape a) un moût à teneur en moût original de 1% qu'on mélange avec un moût fermenté contenant 5% de micro-organismes provenant d'une préparation précédente.

6. Boisson rafraîchissante sans alcool suivant l'une des revendications précédentes, qui peut s'obtenir en introduisant à l'étape b), en tant que micro-organisme, du *gluconbacter oxydans*.

7. Boisson rafraîchissante sans alcool suivant l'une des revendications précédentes, qui peut s'obtenir en faisant fermenter à l'étape b) jusqu'à une valeur de pH qui est au moins ≤ 2,8 et notamment de 2,3, et en ce qu'on ajoute le sel de corps minéral en une quantité telle qu'après l'addition, la valeur de pH est supérieure à 2,8.

8. Boisson rafraîchissante sans alcool suivant la revendication 7, qui peut s'obtenir en faisant fermenter complètement à l'étape b) le glucose présent et, après addition du sel de corps minéral,
d) on aère de nouveau pendant 12 à 60 h, notamment 24 à 48 h,
e) on laisse ensuite reposer 6 à 10 jours, notamment 8 jours, et on insuffle éventuellement du CO₂ pour éliminer l'oxygène.

9. Boisson rafraîchissante sans alcool suivant l'une des revendications précédentes, qui peut s'obtenir par le fait qu'après exécution soit de l'étape c), soit de l'étape e), on mélange avec un agent d'adoucissement, on filtre, on dilue à l'eau, on carbonise et/ou on soutire.

10. Boisson rafraîchissante sans alcool suivant l'une des revendications précédentes, caractérisée par au moins 5 g/l, notamment 10 à 20 g/l, d'acide gluconique et au moins 15 mmol/l, notamment 20 à 80 mmol/l, de gluconate, notamment sous forme de gluconate de Na, K, Mg et/ou Ca.

11. Procédé de préparation d'une boisson rafraîchissante sans alcool, caractérisé en ce qu'on exécute les étapes de procédé décrites dans l'une des revendications 1 à 9.
